# EUROPÄISCHE PATENTSCHRIFT

(11) **EP 0 544 203 B1**
(45) Veröffentlichungstag und Bekanntmachung des Hinweises auf die Patenterteilung: **18.02.1998**
(21) Anmeldenummer: 92119872.7
(22) Anmeldetag: 22.11.1992
(51) Int. Cl.: B61D 17/22, B60D 5/00

(54) **Faltenbalg für Gelenkfahrzeuge**
Bellows for articulated vehicles
Soufflet pour véhicules articulés

(30) Priorität: 27.11.1991 DE 4138922; 07.12.1991 DE 4140418
(43) Veröffentlichungstag der Anmeldung: 02.06.1993
(73) Patentinhaber: HÜBNER GUMMI- UND KUNSTSTOFF GmbH, D-34019 Kassel (DE)
(72) Erfinder: Hübner, Reinhard, Postfach 10 19 20, W-3500 Kassel 1 (DE)
(74) Vertreter: Walter, Helmut, Dipl.-Ing.

(56) Entgegenhaltungen:
- EP-A- 0 329 031
- EP-A- 0 336 809
- DE-A- 4 106 021
- GB-A- 186 622

## Beschreibung

### Gebiet der Erfindung

Die Erfindung bezieht sich auf einen Faltenbalg, wie er zwischen zwei gelenkig miteinander verbundenen Fahrzeugen eingebaut wird, um eine Übergangsbrücke zwischen beiden Fahrzeugen zu umgeben. Es können so Passagiere über die Übergangsbrücke von einem zum anderen Fahrzeug gelangen, ohne daß sie ungeschützt dem Wetter und dem Fahrtwind ausgesetzt sind (z.B. US 4,860,665 Fig. 1, entsprechend Fig. 1 der vorliegenden Anmeldung).

Ein solcher Faltenbalg hat ein Dach und zwei Seitenwände sowie einen Übergangsbereich zwischen dem Dach und jeder Seitenwand. Gegebenenfalls sind die unteren Enden der Seitenwände unterhalb der Übergangsbrücke durch einen Balgboden miteinander verbunden (z.B. EP 275 365). Entsprechend dem Balgdach ist der Balgboden an jedem Ende über einen Übergangsbereich mit einer der Seitenwände verbunden.

### Technischer Hintergrund

Ein solcher Faltenbalg ist üblicherweise so aufgebaut, daß der Boden in der Mitte und der Längsrichtung geteilt ist, daß je eine Falte vom einen Rand der Trennungslinie über die zugehörige Balgbodenhälfte einen unteren Übergangsbereich, eine Balgseitenwand, einen oberen Übergangsbereich, das Balgdach, einen weiteren oberen Übergangsbereich, die zweite Balgseitenwand, einen weiteren unteren Übergangsbereich und schließlich die andere Balgbodenhälfte zum anderen Rand der Trennungslinie des Balgbodens verläuft (EP 114 913). Ist ein solcher Balg eingebaut, so wird er am unteren Ende durch geeignete Verschlüsse miteinander verbunden.

Normalerweise ist ein solcher Balg aus einzelnen Streifen zusammengesetzt, von denen jeder den Querschnitt eines V oder auch beispielsweise eines Halbkreises hat. An den Rändern sind zwei aufeinanderfolgende Streifen durch Rahmen zusammengehalten (z.B. US 4,690,421). Auf der ganzen Länge in der Umfangsrichtung des Balges haben die einzelnen Streifen oder Falten von Haus aus gleiche Material- und Verformungseigenschaften. Dadurch ist der Balg in den Übergangsbereichen zwischen den Seitenwänden und Dach bzw. Boden ziemlich steif. Dies ist unerwünscht. Es ist deshalb bereits vorgeschlagen worden, den Balg in den Übergangsbereichen besonders auszubilden, um die "Balgecken" weicher zu machen, als sie es von Haus aus sind. Um das zu erreichen, können die einzelnen Streifen aus einzelnen, in Balgumfangsrichtung aufeinanderfolgenden Abschnitten zusammengesetzt werden, wobei für die Übergangsbereiche Material verwendet wird, das weicher ist als das Material für die Seitenwände, das Dach und den Boden (EP 275 365). Ein entsprechender Effekt kann auch dadurch erzielt werden, daß in die Übergangsbereiche Zusatzfalten eingebaut werden, wodurch der Balg auch in den Übergangsbereichen weicher ist, als es von Haus aus der Fall sein müßte (DE 26 17 931).

Schließlich ist es auch bekannt, vor die Seitenwände eines Balges eine weitere Wand zu hängen, um im Bereich der Seitenwände eine besonders gute Schallisolierung zu haben oder um zwischen Balgseitenwand und vorgehängter Wand einen für die Passagiere unsichtbaren Raum zu haben, in dem Funktionselemente untergebracht werden können (US 4,690,421).

In EP-A-0336809 ist ein Balg zwischen zwei gelenkig miteinander verbundenen Fahrzeugen angeordnet, bei dem die Seitenwände, das Dach, der Boden und Übergangsbereiche zwischen den unteren Enden der Seitenwände und dem Boden soweit verstärkt sind, daß ein Durchhängen des Balges weitestgehend vermieden ist, wobei die Möglichkeit erwähnt ist, bei Vorliegen geringerer Ansprüche, die erfüllt werden sollen, die Verstärkung auf die Seitenwände zu beschränken.

### Problem der vorliegenden Erfindung

Aufgabe der Erfindung ist es, einen solchen Faltenbalg besser an die Betriebsverhältnisse anpassen zu können. Betriebsverhältnisse bedeutet: der Balg soll sich in Längsrichtung gut verformen können, er soll auch seitliche und vertikale Relativbewegungen zwischen den Fahrzeugen nur wenig behindern und er soll schließlich so steif sein, daß er nicht durchhängt.

### Lösung des Problems durch die Erfindung

Zur Lösung des geschilderten Problems schlägt die Erfindung vor, daß der Balg in den Bereichen der Seitenwände besondere Versteifungsmittel aufweist.

Hierdurch kann der Balg in allen Bereichen ziemlich weich sein, so daß er insoweit Relativbewegungen zwischen den Fahrzeugen nicht wesentlich behindert. Lediglich die Seitenwände, die von Haus aus nur wenig Einfluß auf die Relativbewegungen zwischen den einzelnen Fahrzeugen haben, können durch die Versteifungsmittel so versteift werden, daß der Faltenbalg auch dann nicht nach unten durchhängt, wenn er eine große Länge hat, der Abstand zwischen den beiden Fahrzeugen also relativ groß ist.

Im Dach und im Boden ist eine solche Maßnahme nicht nötig, weil die Breite des Balges in der Regel wesentlich geringer ist als seine Länge, so daß Dach und Boden in der Längsrichtung sicher gehalten und am Durchhängen gehindert sind, während sie in Querrichtung eben wegen der geringen Breite des Balges von Haus aus weniger zum Durchhängen neigen. Die Übergangsbereiche können leicht verformbar sein, ohne daß sie sich z.B. nach außen umstülpen, weil sie ebenfalls von den Seitenwänden gehalten sind. Gegebenenfalls kann der Übergang von den steifen Wänden in das weichere Dach und den weicheren Boden in den Übergangsbereichen kontinuierlich zu- bzw. abnehmend erfolgen, so daß ebenfalls auf unterschiedliche Anforderungen Rücksicht genommen werden kann.

Die Erfindung zeigt insbesondere Möglichkeiten auf, wie die Balgseitenwände in besonders zweckmäßiger Weise verstärkt werden können.

### Figurenbeschreibung

Die Erfindung ist nachfolgend anhand der Zeichnung näher erläutert. In der Zeichnung zeigen:
- Figur 1: den Übergangsbereich zwischen zwei miteinander gelenkig gekuppelten Eisenbahnwagen mit Übergangsbrücke und Faltenbalg in perspektivischer Darstellung,
- Figur 2: eine simplifizierte Darstellung eines Balgquerschnittes bzw. eines Blickes auf eine der Stirnseiten des Balges,
- Figur 3: in perspektivischer Darstellung einen in seiner Längsrichtung im Balgboden geteilten Faltenbalg,
- Figur 4: einen Balgausschnitt in perspektivischer Darstellung, wobei es sich um einen Vertikalschnitt durch das Balgdach handelt,
- Figuren 5,6: Balgquerschnitte in einer Seitenwand (Fig. 5) bzw. einem Balgdach (Fig. 6),
- Figur 7: einen Aufbau des Materials des Balges im Bereich des Balgdaches, der Übergangsbögen und gegebenenfalls des Balgbodens,
- Figur 8: einen Aufbau des Materials des Balges im Bereich der Balgseitenwände.

### Detaillierte Beschreibung der Erfindung

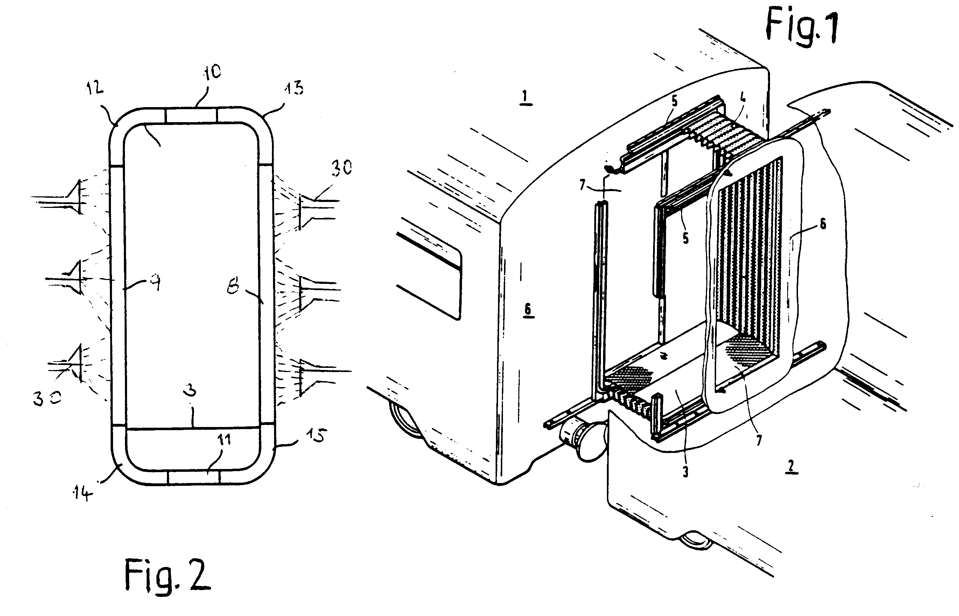

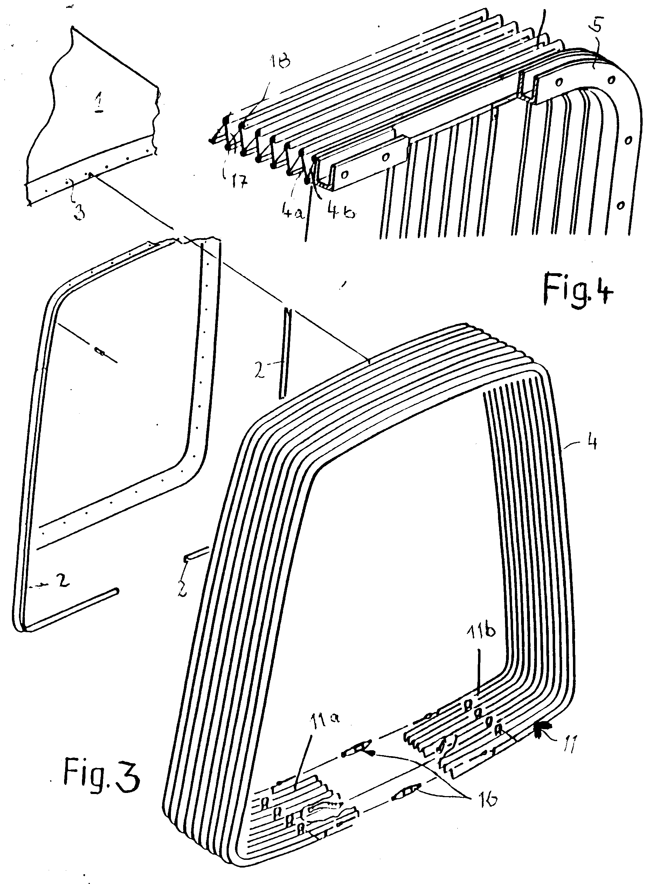

Zwischen zwei Eisenbahnwagen 1,2 ist eine Übergangsbrücke 3 angeordnet (Fig. 1). Um es Passagieren zu ermöglichen, die Übergangsbrücke vom Inneren der beiden Eisenbahnwagen aus zu betreten, ist in der Stirnseite 6 jedes der beiden Eisenbahnwagen 1,2 eine Durchgangsöffnung 7 vorgesehen. Um es den Passagieren zu ermöglichen, sich auf der Übergangsbrücke 3 von Umgebungseinflüssen (Regen, Schnee, Staub, Fahrtwind) unbeeinträchtigt aufzuhalten, ist diese von einem Faltenbalg 4 umgeben. Der Faltenbalg weist an jedem Ende einen Endrahmen 5 auf und mit diesem Endrahmen ist der Faltenbalg an den beiden Stirnseiten der beiden Eisenbahnwagen befestigt. Er umgibt dabei die Stirnwandöffnungen 7 und die Übergangsbrücke 3. Der Faltenbalg 4 weist zwei Seitenwände 8 und 9 auf, die an den oberen Enden durch das Faltenbalgdach 10 und an den unteren Enden unterhalb der Brücke 3 durch den Faltenbalgboden 11 miteinander verbunden sind (Fig. 2). Übergangsbereiche 12,13 verbinden oben die Seitenwände 8,9 mit dem Faltenbalgdach 10, Übergangsbereiche 14,15 verbinden unten die Seitenwände 8,9 mit dem Faltenbalgboden 11. Der Faltenbalgboden 11 ist in Längsrichtung geteilt. Zur Montage hat der Faltenbalg 4 etwa den Zustand, wie er in Fig. 3 dargestellt ist, so daß der Balgboden 11 unter die Brücke 3 gebracht werden kann. Danach werden die beiden Hälften 11a und 11b des Faltenbalgbodens 11 durch Verbindungsmittel 16 miteinander verbunden, wobei die einander zugekehrten Stirnseiten der Faltenbalgbodenhälften dicht aneinanderliegen oder sich die Faltenbalgbodenhälften sogar etwas einander überdecken. Auf jeden Fall bildet der Faltenbalg nach der Anbringung an den Stirnseiten 6 der Eisenbahnwagen 1,2 und dem Schließen der Verbindungsmittel 16 eine gegen Fahrtwind, Schnee, Regen und Schmutz dichte Röhre, in der sich die Übergangsbrücke 3 befindet.

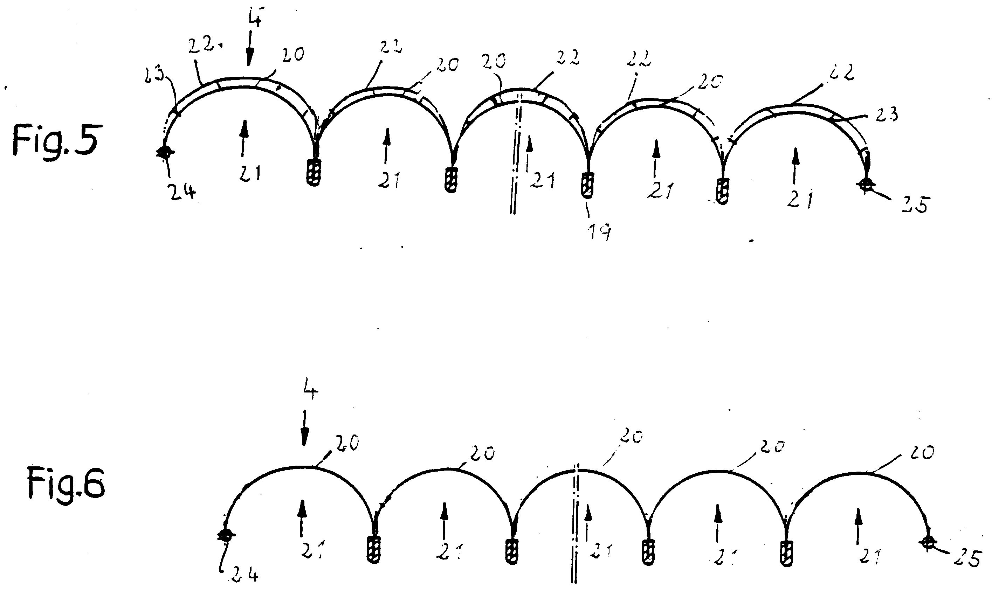

Eine mögliche Querschnittsform des Faltenbalges 4 ist in Fig. 4 in größerer Darstellung gezeigt. Der Balg ist zickzackförmig. Jeweils zwei flache Materialstreifen 4a,4b bilden ein "V" und sind an der Spitze dieses "V" durch einen Rahmen 17 miteinander verbunden. Zwei derartige aufeinanderfolgende "V" sind durch einen weiteren Rahmen 18 miteinander verbunden. Die Rahmen 17 und 18 sind rinnenförmige Profile aus insbesondere Aluminium, die zwei Faltenbalgstreifen durch Klemmwirkung zusammenhalten.

Nach Fig. 5 sind die von Materialstreifen gebildeten Rinnen nicht zickzackförmig. Sie haben im Querschnitt die Form eines aus einer Materialbahn gebogenen Halbkreises und zwei aufeinanderfolgende Halbkreise sind an den aneinanderliegenden Rändern durch Klemmprofile bzw. Rahmen 19, die den Rahmen 17,18 entsprechen, zusammengehalten.

Bisher handelt es sich um eine konventionelle Bauweise, die keiner mehr ins einzelne gehenden Erläuterung bedarf.

Ausgehend von der Fig. 5 wird nun die erfindungsgemäße Ausbildung eines Faltenbalges beschrieben, wie er in verschiedenen Ausführungen in den Fig. 1 bis 4 dargestellt und in einer besonderen Ausführung in Fig. 5 dargestellt ist. Fig. 5 stellt einen Balgquerschnitt im Bereich der Balgseitenwände 8,9 dar.

Der Balg 4 besteht aus mehreren in der Längsrichtung des Balges aufeinanderfolgenden "Falten", die jedoch die Form von im Querschnitt halbkreisförmigen Wellen 20 haben, wobei der vom Balg umschlossene Innenbereich durch die Pfeile 21 gekennzeichnet ist. Die Wellen sind einzelne Materialbahnen und je zwei Materialbahnen sind an den einander zugekehrten Rändern durch Profile 19 zusammengehalten. Der Wandverstärkung dient dabei eine weitere Wand 22, die wie die eigentliche Balgseitenwand aufgebaut und konturiert ist und deren Materialbahnen entsprechend mit den Klemmprofilen 19 miteinander und mit den Materialbahnen der eigentlichen Balgwand verbunden sind. Darüber hinaus sind die beiden Balgwände 20,22 durch Stege 23 miteinander verbunden.

Die Balgzuordnung zu den Fahrzeugen 1,2 erfolgt mit Endrahmen 24,25. Im Bereich einer jeden Rinne bzw. halbkreisförmigen Welle 20 der eigentlichen Balgwand ist die Rinne bzw. halbkreisförmige Welle 22 der äußeren Wand vom Materialstreifen der inneren Wand durch die Stege 23 vom Rinnenscheitel aus seitwärts auf einem vorgegebenen Abstand gehalten, bis sich beide Balgstreifen zu den Rändern hin einander nähern, um schließlich im Bereich der Ränder aufeinanderzuliegen. Mit den beiden aufeinanderliegenden Rändern sind beide Balgbahnen dann in einem gemeinsamen Klemmprofil bzw. Rahmen 19 bzw. 24 bzw. 25 festgehalten. Sie begrenzen einen Zwischenraum, der die Form einer regelmäßigen Mondsichel hat, solange sich der Balg unbeansprucht in seiner regulären Ausgangsstellung befindet. Im mondsichelförmigen Raum befinden sich die vorerwähnten Stege 23.

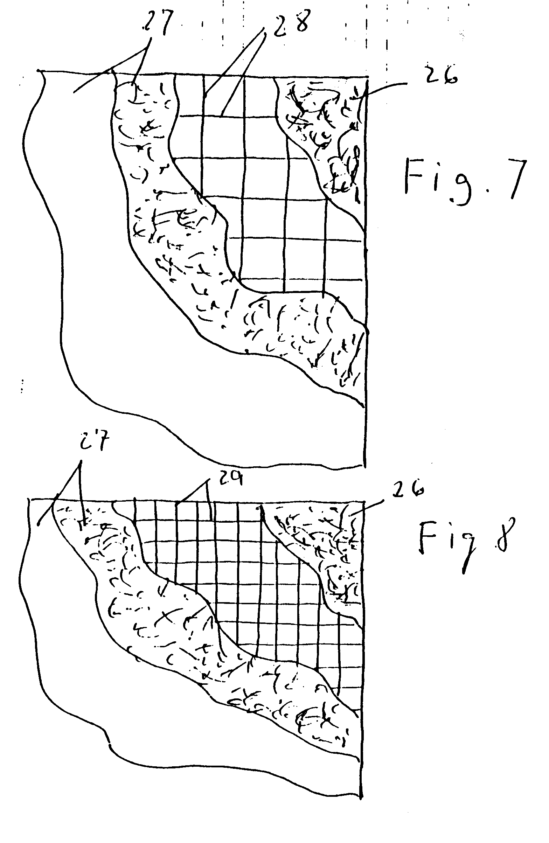

Erfindungsgemäß liegt nun eine solche Balgausbildung im Bereich der Balgseitenwände 8,9 (Fig. 2) vor. In den Bereichen des Balgdaches 10, des Balgbodens 11 und der Übergangsbereiche 12 bis 15 hat der Balg die Kontur der Rinnen 20, die Rinnen 20 fehlen. Fig. 5 stellt damit einen Balgwandquerschnitt im Bereich der Balgseitenwände 8,9 dar, während Fig. 6 einen entsprechenden Balgwandquerschnitt in den Bereichen des Balgdaches 10, des Balgbodens 11 und der Übergangsbereiche 12 bis 15 darstellt.

Im Zusammenhang mit Fig. 5,6 wurde bisher angenommen, daß auf dem gesamten Balgumfang die innere Balgwand 20 und im Bereich der Seitenwände 8,9 auch die äußere Balgwand aus gleichem Material bestehen, insbesondere einem beschichteten Gewebe, wobei das Gewebe aus Textil oder Kunststoff-Fasern, die Beschichtung aus Gummi oder gummiartigem Kunststoff besteht. Eine weitere Ausbildung ist dadurch gekennzeichnet, daß die äußere Balgwand aus einem festeren Material besteht. Dies kann beispielsweise dadurch erzielt werden, daß die aufgesetzten Balgseitenwände 20 aus einem beschichteten Gewebe bestehen, das relativ dicht ist, während die eigentliche Balgwand, im Bereich der Balgseitenwände die innere Balgwand, aus einem beschichteten Gewebe besteht, das größere Abstände zwischen den Gewebefäden aufweist. Fig. 7 zeigt das mit Gummi oder einem gummiartigen Werkstoff 26,27 beschichtete Gewebe 28, das relativ weitmaschig ist und demzufolge das Material des eigentlichen Balges ist. Fig. 8 zeigt mit Gummi oder einem gummiartigen Werkstoff 26,27 beschichtete Gewebe 29, das engermaschig ist.

Diese Lösung führt zu der weiteren Lösung, den Balg aus mehreren in Umfangsrichtung aufeinanderfolgenden Abschnitten aufzubauen, die unterschiedlich und miteinander verbunden sind. In diesem Fall stellt Fig. 8 das Balgmaterial der Seitenwände 8,9 in Fig. 2 dar, wobei das Gewebe 29 gegebenenfalls noch engermaschig sein kann, während Fig. 7 das Balgmaterial im Bereich der übrigen Balgabschnitte, also des Daches 10, des Bodens 11 und der Übergangsbereiche 12 bis 15 darstellt, wobei das Gewebe u.U. noch eine größere Maschenweite haben kann oder, anders formuliert, der Unterschied der Maschenweite noch größer als dargestellt sein kann.

Eine entsprechende Wirkung kann erzielt werden, wenn auf dem gesamten Balgumfang gleiches Ausgangsmaterial verwendet wird, das Material jedoch im Bereich der Balgseitenwände einer verhärtenden Behandlung unterzogen wird. In Fig. 2 sind im Bereich der Balgseitenwände Energiespender 30 angeordnet, die allein auf die Seitenwände einwirken und das im Bereich der Seitenwände verwendete Material härter machen, als es von Haus aus ist und in den übrigen Bereichen, also im Gesamtbereich abzüglich der Seitenwände, dem Material die ursprüngliche, geringere Härte belassen. Ein solches Verfahren ohne Bezugnahme auf die vorliegende Erfindung ist beschrieben in DE 37 11 032 A1.

Bei der Lösung mit der aufgesetzten Doppelwand (Fig. 5) kann die außen aufgesetzte Wand mit den Wellen 22 auch auf der Innenseite des Balges aufgesetzt sein.

Bei Verwendung der Festigkeitsveränderung durch Strahlung können auch innerhalb der einzelnen Balgabschnitte und sogar innerhalb jeder Balgbahn Bereiche unterschiedlicher Härte bzw. Festigkeit geschaffen werden.

Unter Zugrundelegung des Aufbaues eines Balges gemäß Fig. 2 mit mehreren in Umfangsrichtung aufeinanderfolgenden Abschnitten ist es möglich, jeden Abschnitt durch selektive "Strahlenvernetzung" zu einer Eigenschaft zu verhelfen, die optimal ist für den Bereich des Balges, in dem der Abschnitt eingesetzt werden soll. Die Seitenwandabschnitte 8,9 können in vertikaler Richtung besonders steif gemacht werden, ohne die Nachgiebigkeit in anderen Richtungen wesentlich zu beeinträchtigen.

## Patentansprüche

1. Wellenförmiger Balg als Übergangsschutz, der einer Übergangsbrücke zwischen zwei gelenkig miteinander gekuppelten Fahrzeugen zuzuordnen ist, aus einem Dach, Seitenwänden, Übergangsbögen zwischen Dach und Seitenwänden und gegebenenfalls einem Boden besteht und Verstärkungen gegen das Durchhängen des Balges nur in den Seitenwänden des Balges aufweist, **dadurch gekennzeichnet, daß** zur Optimierung des Balges einerseits bezüglich des Durchhängens des Balges und andererseits Bewahrung der Möglichkeit der unbehinderten Querbewegungen zwischen den Fahrzeugenden die Übergangsbögen so ausgelegt sind, daß der Übergang zwischen der Steifigkeit der Seitenwände und der von Dach sowie gegebenenfalls Boden ein stetiger Übergang ist.

2. Balg nach Anspruch 1, **dadurch gekennzeichnet**, daß die zusätzliche Versteifungsmittel eine zweite Seitenwand sind.

3. Balg nach Anspruch 2, **dadurch gekennzeichnet**, daß die jeweilige zweite Seitenwand mit der jeweiligen ersten Seitenwand verbunden ist.

4. Balg nach Anspruch 3, **dadurch gekennzeichnet**, daß die jeweilige zweite Seitenwand mit der jeweiligen ersten Seitenwand flächig verbunden ist.

5. Balg nach Anspruch 3, bei dem im Seitenwandbereich jeweils zwei Materialbahnen zumindest auf einem wesentlichen Teil der Länge ihrer Ränder durch Klemmprofile zusammengehalten sind, **dadurch gekennzeichnet**, daß die jeweilige zweite Seitenwand mit der jeweiligen ersten Seitenwand mittels der Klemmprofile verbunden ist.

6. Balg nach Anspruch 2, **dadurch gekennzeichnet**, daß die jeweilige zweite Seitenwand konturengleich der jeweiligen ersten Seitenwand folgt.

7. Balg nach Anspruch 2, **dadurch gekennzeichnet**, daß die Kontur der jeweiligen zweiten Seitenwand von der Kontur der jeweiligen ersten Seitenwand abweicht.

8. Balg nach Anspruch 7, **dadurch gekennzeichnet**, daß die jeweilige zweite Seitenwand glatt bzw. eben ist.

9. Balg nach Anspruch 1, **dadurch gekennzeichnet**, daß die zusätzlichen Versteifungsmittel als Verstärkungsfäden in die Balgseitenwände integriert sind.

10. Balg nach Anspruch 1, bei dem jede Welle im Dach, gegebenenfalls Boden, Seitenwänden und Übergangsbogen aus einem einzigen Stoffstreifen besteht, der speziell in den Ecken vorgeformt ist, so daß er die gewünschte Kontur hat und durch den Verformungsprozeß gewährleistet ist, daß die Wellen sich eindeutig nur in eine Richtung bewegen und nicht umstülpen können, **gekennzeichnet dadurch**, daß ein dehnbarer Stoff in der Seite in den Befestigungsrahmen so eingezogen wird, daß er wieder eine besondere Steifigkeit erreicht, in den Bereichen, in denen Bewegung erforderlich ist, so locker eingebaut wird, daß sich die notwendige Dehnung, speziell im Dach-, gegebenenfalls Boden- und Eckenbereich, ergibt.

## Claims

1. A corrugated bellows as gangway protection associated with a gangway floorplate between two pivotally interconnected vehicles, consisting of a roof, side walls, transition curves between the roof and the side walls and, if required, a base and having bellows anti-sag reinforcements only in the side walls of the bellows, characterised in that in order to optimise the bellows, on the one hand, in respect of the bellows sag and, on the other hand, retain the possibility of unobstructed transverse movements between the vehicle ends, the transition curves are so designed that the transition between the rigidity of the side walls and that of the roof and where applicable the base is a continuous transition.

2. A bellows according to claim 1, characterised in that the additional stiffening means are a second side wall.

3. A bellows according to claim 2, characterised in that the respective second side wall is connected to the respective first side wall.

4. A bellows according to claim 3, characterised in that the respective second side wall is connected flat to the respective first side wall.

5. A bellows according to claim 3, wherein in the side wall region a pair of material webs are held together over at least an appreciable part of the length of their edges by clamping profiles,
characterised in that the respective second side wall is connected to the respective first side wall by means of the clamping profiles.

6. A bellows according to claim 2, characterised in that the respective second side wall identically follows the contour of the respective first side wall.

7. A bellows according to claim 2, characterised in that the contour of the respective second side wall differs from the contour of the respective first side wall.

8. A bellows according to claim 7, characterised in that the respective second side wall is smooth and planar.

9. A bellows according to claim 1, characterised in that the additional stiffening means are integrated in the form of reinforcing threads or filaments in the bellows side walls.

10. A bellows according to claim 1, wherein each corrugation in the roof, and where applicable the base, side walls and transition curves consist of a single strip of material which is preshaped specially in the corners so as to have the required contour and the deformation process ensures that the corrugations can move distinctly only in one direction and cannot invert, characterised in that an extensible material is so drawn into the fixing frame in the side that while it has a particular stiffness it is incorporated so loosely in the zones in which movement is required that the necessary extensibility is obtained, particularly in the roof, and where applicable the base, and corner zones.

## Revendications

1. Soufflet ondulé comme protection de passage devant être associé à une passerelle entre deux véhicules couplés et articulés l'un à l'autre, qui est constitué d'un toit, de parois latérales et d'arcs de transition entre le toit et les parois latérales et éventuellement d'un sol, et qui comporte des renforts contre le fléchissement du soufflet seulement dans les parois latérales du soufflet, **caractérisé en ce que**, pour optimiser le soufflet d'une part par rapport au fléchissement du soufflet et d'autre part par rapport à la conservation de la possibilité de mouvements transversaux libres entre les extrémités des véhicules, les arcs de transition sont conçus de telle sorte que la transition entre la rigidité des parois latérales et celle du toit et éventuellement du sol est une transition continue.

2. Soufflet selon la revendication 1, **caractérisé en ce que** le moyen supplémentaire servant de renfort est une seconde paroi latérale.

3. Soufflet selon la revendication 2, **caractérisé en ce que** chaque seconde paroi latérale est liée à la première paroi latérale respective.

4. Soufflet selon la revendication 3, **caractérisé en ce que** chaque seconde paroi latérale est liée par sa surface à la première paroi latérale respective.

5. Soufflet selon la revendication 3, selon lequel, dans la zone des parois latérales, à chaque fois deux bandes de matériau sont maintenues ensemble au moins sur une grande partie de la longueur de leurs bords par des profilés de serrage, **caractérisé en ce que** chaque seconde paroi latérale est liée à la première paroi latérale respective au moyen des profilés de serrage.

6. Soufflet selon la revendication 2, **caractérisé** **en ce que** chaque seconde paroi latérale suit avec le même contour la première paroi latérale respective.

7. Soufflet selon la revendication 2, **caractérisé en ce que** le contour de chaque seconde paroi latérale s'écarte du contour de la première paroi latérale respective.

8. Soufflet selon la revendication 7, **caractérisé en ce que** la seconde paroi latérale est lisse ou plane.

9. Soufflet selon la revendication 1, **caractérisé en ce que** les moyens supplémentaires servant de renforts sont intégrés sous forme de fils de renfort dans les parois latérales du soufflet.

10. Soufflet selon la revendication 1, dans lequel chaque ondulation dans le toit, dans les parois latérales, dans les arcs de transition et éventuellement dans le sol, est constituée d'une seule bande de matériau qui est préformée spécialement dans les coins de telle sorte qu'elle a le contour souhaité et qu'elle garantit par le processus de déformation que les ondulations ne peuvent se déplacer que dans un sens et ne peuvent pas se retrousser, **caractérisé en ce qu**'un matériau extensible est rentré sur le côté dans les cadres de fixation de manière à obtenir de nouveau une rigidité particulière et en ce que, dans les zones où un mouvement est nécessaire, il est agencé suffisamment lâche de manière à obtenir l'extension nécessaire, spécialement dans les zones du toit, éventuellement du sol, et des coins.
